# EUROPEAN PATENT APPLICATION

(11) **EP 1 650 888 A1**
(43) Date of publication of application: **26.04.2006**
(21) Application number: 05256094.3
(22) Date of filing: 29.09.2005
(51) Int. Cl.: H04B 10/00, H04B 10/20

(54) **Terrestrial optical communication system having remotely powered nodes**

(30) Priority: 25.10.2004 US 972541
(71) Applicant: LUCENT TECHNOLOGIES INC., Murray Hill, New Jersey 07974-0636 (US)
(72) Inventor: Chraplyvy, Andrew Roman, Matawan, New Jersey 07747 (US)
(74) Representative: Sarup, David Alexander

(57) **Abstract**

A terrestrial optical communication system including a plurality of optical nodes interconnected by optical links utilizes a hybrid optical/electrical cable to provide electrical power from one or more powered system nodes to one or more remote unpowered nodes that have no access to locally provided electrical power.

## Description

### TECHNICAL FIELD OF THE INVENTION

This invention relates generally to optical communication systems and, more particularly, to a terrestrial optical communication system that utilizes a hybrid optical/electrical cable to remotely power nodes that have no local electrical power thereat.

### BACKGROUND OF THE INVENTION

Terrestrial systems typically include terminals (usually located at central offices) and remotely located repeater sites or nodes housing optical amplifiers and/or regenerators. These repeater nodes are electrically powered using locally provided commercial power.

Recently unusual network configurations have been proposed that include one or more repeater nodes that have no access to locally provided commercial electrical power. At some of these locations solar power is sufficient to locally provide the electrical power needed at a repeater node. At other repeater node locations where solar power is insufficient, the only viable alternative is generator power, which requires periodic refueling by means of a fuel truck. This method of powering a repeater node is exceedingly expensive.

What is desired is a less expensive, yet reliable, arrangement for providing electrical power to repeater nodes that have no access to locally provided commercial electrical power.

### SUMMARY OF THE INVENTION

In accordance with the present invention, a terrestrial optical communication system including a plurality of optical nodes interconnected by optical links utilizes a hybrid optical/electrical cable to provide electrical power from one or more powered system nodes to one or more remote un-powered nodes that have no access to locally provided electrical power.

More specifically according to my invention, a terrestrial optical communication system provides optical communications over a plurality of optical nodes interconnected by optical links, the system comprising
at least one powered node connected over a first hybrid optical/electrical cable link to a remote node, said at least one powered node having electrical power thereat;
said remote node being an un-powered node having no local electrical power thereat; and
said first hybrid optical/electrical cable link including an optical cable to provide optical communications between said at least one powered node and said remote un-powered node and an electrical cable to provide electrical power from said at least one powered node to said remote un-powered node.

According to one feature, the nodes of the terrestrial optical communication system may be interconnected in one of plurality of network arrangements including a linear node network, a ring node network, or a mesh node network. In another feature, a remote un-powered node may include apparatus selected from a group including a repeater, a regenerator, or an amplifier. One system arrangement enables two nodes to power one un-powered node and another system arrangement enables a powered node to power two or more un-powered nodes.

### BRIEF DESCRIPTION OF THE DRAWINGS

The present invention will be more fully appreciated by consideration of the following Detailed Description, which should be read in light of the accompanying drawing in which:
Fig. 1 illustrates a block diagram of a linear terrestrial optical communication network.
Fig. 2 illustrates a block diagram of a ring terrestrial optical communication network.
Fig. 3 illustrates a block diagram of a mesh terrestrial optical communication network.

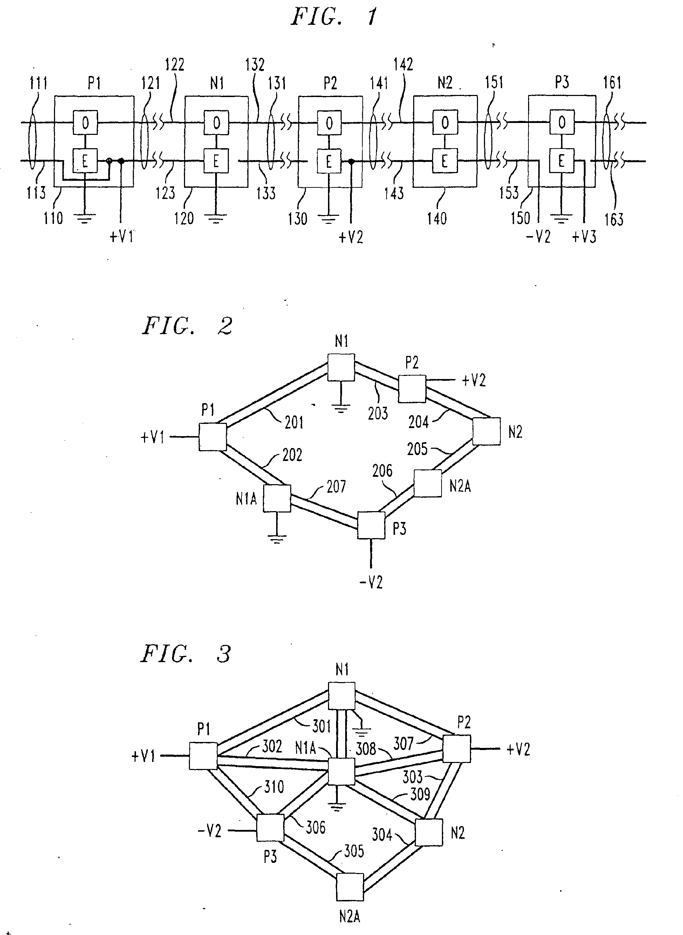

In the following description, identical element designations in different figures represent identical elements. Additionally in the element designations, the first digit refers to the figure in which that element is first located (e.g., 101 is first located in Fig. 1).

### DETAILED DESCRIPTION

Figure 1 illustrates a generalized block diagram of a point-to-point terrestrial optical communication network (also referred to herein as a linear network) including a hybrid optical/electrical cable to remotely power nodes that have no locally provided electrical power. While a hybrid optical/electrical cable has been used in undersea applications where both end terminals are used to power all of the submerged system nodes (repeaters or amplifiers) of a point-to-point (or linear) network, such a technique has not been used in terrestrial systems to power a subset of remote system nodes that have no locally provided electrical power. In Fig. 1, an illustrative section of a point-to-point terrestrial optical communication network, which does not include the end terminals, is shown to include a plurality of optical nodes 110, 120, 130, 140, and 150 which are linearly interconnected together by a hybrid optical/electrical cable segment or link 111, 121, 131, 141, 151, and 161, respectively. Each of the hybrid optical/electrical cable links e.g., 121, include an optical fiber, e.g., 122, to provide optical communication between the nodes, e.g., 110 and 120, and an electrical cable e.g., 123, which may be used to provide electrical power from a node that have electrical power, e.g., 110 to a node, e.g., 120, that does not have electrical power. hybrid optical/electrical cable link may be implemented using optical and electri cables that are formed together as one hybrid optical/electrical cable or may implemented using separate optical and electrical cables that share a common conduit. The powered nodes P1 (110), P2 (130), and P3 (150) have access to locally provided electrical power, shown as V+, V+, and V-, respectively. The un-powered nodes N1 (120) and N2 (140) have no locally provided electrical power. All of the nodes P1, N1, P2, N2, and P3 are shown to include optical, O, and electrical, E, apparatuses that are interconnected to provide well-known repeater, regenerator, or amplification functionality at the nodes. The optical, O, and/or electrical, E, apparatus may illustratively include a reconfigurable Add/Drop multiplexer, an optical router, an optical switch, an optoelectronic device, a photonic device, an erbium-doped fiber amplifier (EDFA), a Raman pump laser, etc.

With reference to node P1, the locally provided electrical power is V1+ powers the electrical apparatus, E, and also is connected over electrical cable 123 to power electrical apparatus, E, of node N1. In this manner node N1, which has no locally available electrical power, receives power from node P1 to operate the electrical apparatus, E, at node N1. The power path extends from a power source V1+ at node P1, through electrical cable 123, electrical apparatus E, and through the electrical ground return path at node N 1 back to V1+ power source at node P1. Node P1 is also shown as providing power V1+ over electrical cable 113 to another node, not shown. If that other node did not require power than there would not be a connection between electrical cable 113 and V1+. As shown, one powered node P1 can power one or more un-powered nodes. Thus unlike the undersea systems, where both end terminals are used to powered all un-powered system nodes, the present invention can use a single powered node, e.g., P1, to power one (e.g., N1) or more (the "another node" powered by electrical cable 113) un-powered nodes.

Note that since node P2 has its own source of power V2+, it does not need to receive power from node P1, via node N1, and, hence, electrical cable 133 is not connected at nodes P1 and N1. In such an arrangement, since the electrical cable 133 is not used, the hybrid optical/electrical cable link 131 that interconnects nodes N1 and P2 could be replaced with just an optical cable 132. Thus, a hybrid optical/electrical cable link is needed only to interconnect a node with electrical power, e.g., P1, to a node with no electrical power, e.g., N1.

According to another aspect of my invention, a node, e.g., N2, which has no locally available electrical power, may also be powered from two nodes, e.g., P2 and P3. As shown, a power source V2+ at node P2 provides electrical power over electrical cable 143, through electrical apparatus E at node N2, and electrical cable 153, to power source V2- at node P3. Such a serial powering arrangement would supply essentially 2V2 volts across electrical apparatus E at node N2.

Note if another un-powered node (N2A, not shown) were located between node N2 and node P3, its electrical apparatus E could be powered in series with the electrical apparatus E of node N2. In such an arrangement, the essentially 2V2 volts would be applied across the serial connection of the two electrical apparatuses E of nodes N2 and N2A. Thus, if the two electrical apparatuses E required the same voltage, they would share the 2V2 volts and each would have V2 volts applied to them. Note, since nodes N2 and N2A are connected in series these nodes need not provide a ground return path. Node P3 is shown to apply V3+ volts to its electrical apparatus E. Node P3 is also shown as not providing any power over electrical cable 163 to an adjacent node. If required, node P3 could also power an adjacent node via electrical cable 163.

With reference to Fig. 2, there is shown a terrestrial optical communication system arranged as a ring node network. The ring network includes nodes P1, N1, P2, N2, N2A, P3, and N1A, which are all shown interconnected by hybrid optical/electrical cable links. All of these nodes are implemented using the optical, O, and electrical, E, apparatuses described for Fig. 1. Again the nodes identified with a P have locally provided electrical power and the node identified by N have no locally provided electrical power. Node P1 provides electrical power V1+ in parallel to node N 1 via electrical cable 201 and to node N1A via electrical cable 202. Power is provided serially to nodes N2 and N2A as follows. Voltage V2+ at node P2 is sent through electrical cable 204 to node N2, and via electrical cable 205 to node N2A and then via electrical cable 206 to node P3 where it connects to the V2- source. Note, since nodes N2 and N2A are connected in series these nodes need not provide a return ground path. Note also that since node N1 receives power from node P1, the electrical cable 203 between nodes N1 and P2 does not carry power. Thus, electrical cable 203 is not connected and can be eliminated. Thus, if desirable the hybrid optical/electrical cable link between nodes N1A and P2 can be replaced by a link that only an optical cable. Similarly, since the electrical cable 207 between nodes P3 and N 1 does not carry power, it is not connected and can be eliminated. Thus, if desirable the hybrid optical/electrical cable links between nodes P3 and N 1 can be replaced by a link including only an optical cable. Thus, hybrid optical/electrical cable links are needed only for the segments having electrical cables that carry power, i.e., 201, 202, 204 - 206.

With reference to Fig. 3, there is shown a terrestrial optical communication system arranged as a mesh node network. The mesh network includes nodes P1, N1, N1A, P2, N2, N2A, and P3, which are all shown interconnected by hybrid optical/electrical cable links. Again the nodes identified with a P have locally provided electrical power and the nodes identified by N have no locally provided electrical power. Node P1 provides electrical power V1+ to node N1 via electrical cable 301 and provides power to node N1A via electrical cable 302. Power is provided serially to nodes N2 and N2A as follows. Voltage V2+ at node P2 is sent through electrical cable 303 to node N2, and via electrical cable 304 to node N2A and then via electrical cable 305 to node P3 where it connects to the V2- source. Note, since nodes N2 and N2A are powered in series these nodes need not provide a return ground path. Also note that the electrical cables 306 - 310 do not carry power between their respective nodes and, hence, these electrical cables 306 - 310 can be eliminated. Thus, if desirable the hybrid optical/electrical cable links that include the electrical cables 306 - 310 can be replaced with links that only include optical cables. Hence hybrid optical/electrical cables are required only for the links that include electrical cables 301 - 305 that carry electrical power to un-powered nodes.

What has been described is illustrative of the present invention. Various modifications of our invention will occur to those skilled in the art. Nevertheless all deviations from the specific teachings of this specification that basically rely upon the principles and their equivalents are properly considered within the scope of the invention as described and claimed.

## Claims

1. A terrestrial optical communication system for providing optical communications over a plurality of optical nodes interconnected by optical links, the system comprising
a single powered node connected over a first hybrid optical/electrical cable link to a remote node, said powered node having electrical power thereat;
said remote node being an un-powered node having no local electrical power thereat; and
said first hybrid optical/electrical cable link including an optical cable to provide optical communications between said powered node and said remote un-powered node and an electrical cable to provide electrical power from said powered node to said remote un-powered node.

2. The terrestrial optical communication system of claim 1 wherein the nodes are interconnected in one of plurality of network arrangements including a linear node network, a ring node network, or a mesh node network.

3. The terrestrial optical communication system of claim 1 wherein said remote un-powered node includes apparatus selected from a group including a repeater, a regenerator, and an amplifier.

4. The terrestrial optical communication system of claim 1 wherein said remote un-powered node apparatus includes apparatus selected from a group including, an add/drop circuit, a router, a switch, a laser, a reconfigurable add/drop multiplexer, an optoelectronic circuit, a photonic circuit, an erbium-doped fiber amplifier (EDFA), and a Raman pump laser.

5. The terrestrial optical communication system of claim 1 wherein the first hybrid optical/electrical cable link may be implemented using (1) optical and electrical cables that are formed together as one hybrid optical/electrical cable or (2) separate optical and electrical cables that share a common conduit.

6. The terrestrial optical communication system of claim 1 wherein said powered node connects over the first hybrid optical/electrical cable link to provide power to said remote un-powered node and connects over a second hybrid optical/electrical cable link to provide electrical power to a second remote un-powered node.

7. The terrestrial optical communication system of claim 1 including a second powered node wherein said powered node and said second powered node each connect over a separate hybrid optical/electrical cable link to provide electrical power to said remote un-powered node.

8. The terrestrial optical communication system of claim 1 including a second powered node wherein said powered node and said second powered node each connect over a separate hybrid optical/electrical cable link to provide electrical power to two or more adjacent remote un-powered nodes.

9. The terrestrial optical communication system of claim 1 wherein for any powered node that does not provide electrical power to a remote un-powered node, the hybrid optical/electrical cable links that connect to that powered node can each be replaced by an optical cable.

10. A method of powering an un-powered remote node of a terrestrial optical communication system including a plurality of optical nodes interconnected by optical links, the method comprising the steps of:
connecting an electrical cable as part of the optical link that connects between a powered node of the system and said remote un-powered node and
providing electrical power over that electrical cable from said powered node to said remote un-powered node.
